# EUROPÄISCHE PATENTSCHRIFT

(11) **EP 0 633 168 B1**
(45) Veröffentlichungstag und Bekanntmachung des Hinweises auf die Patenterteilung: **08.10.1997**
(21) Anmeldenummer: 93110808.8
(22) Anmeldetag: 06.07.1993
(51) Int. Cl.: B60R 21/16

(54) **Airbag für Kraftfahrzeuge**
Airbag for vehicles
Airbag pour véhicules

(43) Veröffentlichungstag der Anmeldung: 11.01.1995
(73) Patentinhaber: Petri AG, D-63704 Aschaffenburg (DE)
(72) Erfinder: Randelzhofer, Konrad, D-63743 Aschaffenburg (DE); Zeller, Gregor, D-63743 Aschaffenburg (DE)
(74) Vertreter: Eyer, Eckhardt Philipp, Dipl.-Ing.

(56) Entgegenhaltungen:
- EP-A- 538 607
- FR-A- 2 219 033
- US-A- 3 586 347
- US-A- 3 797 855
- US-A- 4 169 613

## Beschreibung

Die Erfindung geht aus von einer Gassack-Aufprall-Schutzeinrichtung für Kraftfahrzeuge gemäß dem Oberbegriff des Patentanspruches 1.

Bekannte Gassackaufprall-Schutzeinrichtunge weisen zur Aufnahme des Gasgenerators ein im wesentlichen wannenförmiges Gehäuse auf, das an seiner Öffnung mit einem rundumlaufenden flanschartigen Rand versehen ist, der der Befestigung des an einem Fußende offenen Gaskissens dient. Zu diesem Zweck ist das Gaskissen an seiner Öffnung in der Regel mit Einlegeteilen oder Klemmleisten versehen, mit der er nach dem Befestigen des Generators in dem wannenförmigen Gehäuse mittels Schrauben oder Nieten gasdicht an dessen umlaufendem Rand befestigt wird. Die bekannte Gassack-Aufprall-Schutzeinrichtung weist eine Reihe von Nachteilen auf, deren schwerwiegendster darin besteht, daß die kraftschlüssige Verbindung zwischen dem Gaskissen und dem Gehäuse dazu neigt, sich unter dem im Funktionsfalle explosionsartig erhöhenden Druck zu öffnen, was unter entsprechendem Druckverlust zu einer Funktionsbeeinträchtigung führen kann. Darüberhinaus weist die genannte Befestigung auch einige montagetechnische Nachteile auf. So erfordert die Befestigung des Gaskissens an dem Generator-Gehäuse eine Vielzahl von Niet- bzw. Verschraubungsvorgängen und damit einen entsprechend hohen Montageaufwand und ein erhöhtes Fehlerrisiko.

Es ist aus der den Oberbegriff des Anspruchs 1 bildenden EP-A 538 607 eine Rückhaltevorrichtung für Kraftfahrzeuginsassen bekannt geworden, bei der sich das Gaskissen über zumindest einen hosenträger- bzw. gurtartig ausgebildeten Abschnitt an der Außenseite des Gehäuses abstützt der um einander gegenüberliegende Seitenwände und einen Boden des Gehäuses herumgeführt ist. Durch die bekannte Vorrichtung wird zwar eine verbesserte Abstützung des Gassackes an dem Gehäuse erreicht, sie weist jedoch aufgrund der zur Einbringung des Gehäuses erforderlichen Öffnung eine ungenügende Abdichtung nach außen auf und bedarf daher zur Erreichung dieser Dichtung zusätzlicher aufwendiger Maßnahmen.

Der vorliegenden Erfindung liegt als Aufgabe die Schaffung einer eine erhöhte Gebrauchssicherheit gewährleistende Gassack-Aufprall-Schutzeinrichtung zugrunde.

Diese Aufgabe wird mit einer Gassack-Aufprall-Schutzeinrichtung mit den im Patentanspruch 1 wiedergegebenen Merkmalen gelöst.

Durch die Erfindung ist eine Gassack-Aufparall-Schutzeinrichtung geschaffen, bei der keine kraftschlüssige Verbindung zwischen Gaskissen und Generatorgehäuse, d.h. eine technisch bekanntlich problematische Verbindung zwischen unterschiedlichen Materialien besteht bzw. geschaffen werden muß. Das Generatorgehäuse ist vielmehr Teil des Gaskissens in der Weise, daß es großflächig von diesem umschlossen wird. Dies hat neben dem beschriebenen Vorteil den maßgeblichen weiteren Vorteil, daß im Funktionsfall das Gaskissen bzw. dessen Verbindungsnaht quasi punktförmig an den Nieten belastet wird, die sich explosionsartig erhöhenden Kräfte vielmehr großflächig und damit unter entsprechend verringerter Flächenbelastung auf das Generator-Gehäuse und von dort auf den Generator-Träger übertragen werden. Das Gaskissen umschließt das Generatorgehäuse nicht nur partiell sondern vollständig, wobei durch die Öffnung in Form sich labyrinthartig überdeckender, an den Seitenkanten vernähter Lappen ein das Einbringen des Generatorgehäuses auf einfache Weise ermöglichender Zugang zum Innenraum des Gaskissens geschaffen ist, der sich nicht nur aufgrund der Überlappung selbsttätig schließt sondern dessen Dichtigkeit sich beim Aufblasen des Gassackes aufgrund des sich erhöhenden Innendruckes verstärkt.

Weitere Einzelheiten der in den Patentansprüchen gekennzeichneten Erfindung werden nachstehend anhand der beigefügten Zeichnung erläutert. Es zeigen
- Fig. 1: eine schematische Darstellung einer Gassack-Aufprall-Schutzeinrichtung
- Fig. 2: einen Teilquerschnitt durch Fig. 1
- Fig. 3: eine vergrößerte Teildarstellung der linken oberen Ecke der Gassack-Aufprall-Schutzeinrichtung (Einzelheit III in Fig. 1)
- Fig. 4: eine vergrößerte Teildarstellung der linken unteren Ecke der Gassack-Aufprall-Schutzeinrichtung (Einzelheit IV in Fig. 1)
- Fig. 5: eine vergrößerte Teildarstellung der rechten oberen Ecke der Gassack-Aufprall-Schutzeinrichtung (Einzelheit V in Fig. 1)
- Fig. 6: eine vergrößerte Teildarstellung der rechten unteren Ecke der Gassack-Aufprall-Schutzeinrichtung (Einzelheit VI in Fig. 1)
- Fig. 7: eine perspektivische Darstellung des Gaskissens im Bereich der Labyrinth-Öffnung
- Fig. 8: einen vergrößerten Querschnitt durch das Gaskissen im Bereich der Labyrinth-Öffnung
- Fig. 9: eine perspektivische Darstellung der fertig montierten Gassack-Aufprallschutzeinrichtung
- Fig. 10: einen teilaufgebrochenen Längsschnitt durch eine Gassack-Aufprall-Schutzeinrichtung mit Generator mit am Mantel angeordnetem Zünder
- Fig. 11: einen Querschnitt durch Fig. 10
- Fig. 12: eine schematische Darstellung des Montagevorganges des Generators

Die in der Zeichnung wiedergegebene Gassack-Aufprall-Schutzeinrichtung für Kraftfahrzeuge besteht aus dem Gaskissen 1 und dem Generatorbefestigungsgehäuse 2 zur Aufnahme des Gasgenerators 3. An dem Gaskissen 1 ist an seinem unteren Ende in einem Stück aus dem das Gaskissen 1 bildenden Material eine Tasche 4 angearbeitet, die das Generator-Befestigungsgehäuse 2 allseitig umschließt. Es besteht somit keine kraftschlüssige Verbindung zwischen dem Gaskissen 1 und dem Generator-Befestigungs-Gehäuse 2 sondern vielmehr eine Formschlußverbindung derart, daß das Generator-Befestigungs-Gehäuse 2 fest in dem Gaskissen 1 bezw. der an diesen angearbeiteten Tasche 4 eingebettet ist. Die im Gaskissen im Funktionsfall wirkenden hohen Kräfte werden somit nicht quasi punktförmig über Befestigungsnieten sondern unter entsprechender Verringerung der Flächenbelastung über Tasche 4 bezw. die labyrinthartigen Überlappungen 5, 6 auf das Generator-Befestigungsgehäuse und von dort auf die Wanne 12 bezw. den Halter 13 übertragen.

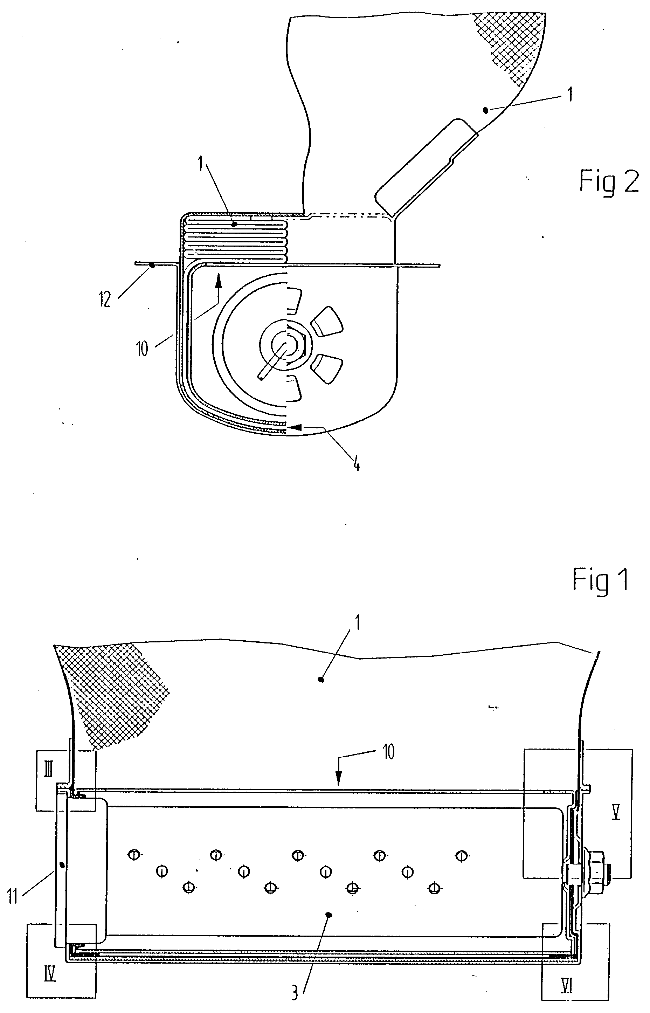

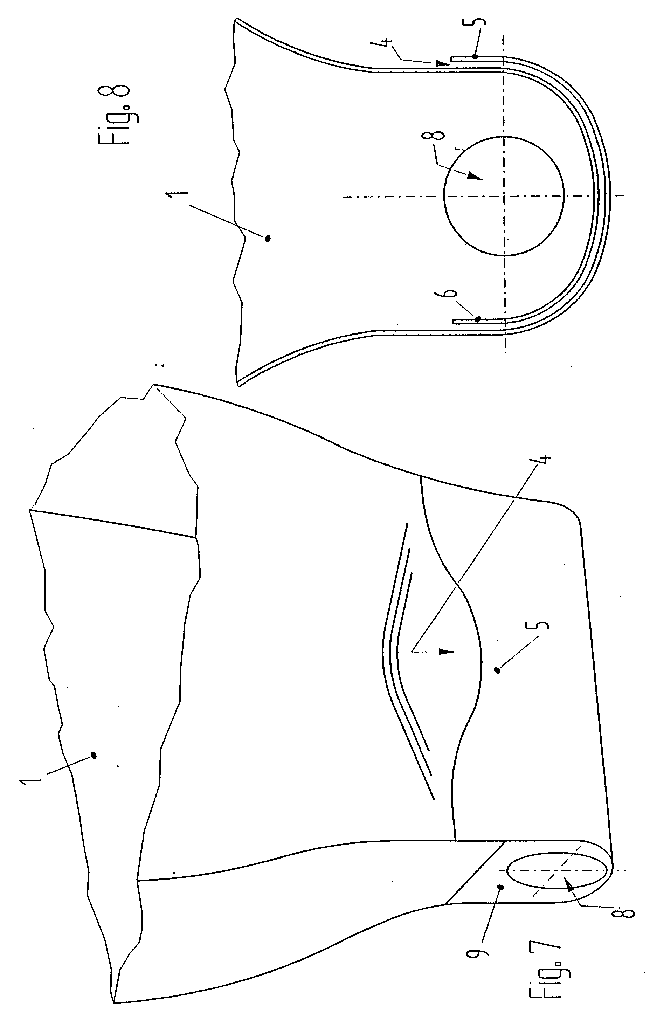

Zur Vereinfachung der Montage ist die Gaskissen-Tasche 4 an ihrem unteren Ende mit einer Öffnung versehen, die im Falle der in den Fig. 1 bis 8 wiedergegebenen Ausführungsform einer Gassackaufprallschutzeinrichtung mit Generator stirnseitig angeordnetem angeordnetem Zünder die Form von - siehe insbesondere die Fig. 7 und 8 - sich labyrinthartig überdeckenden, an den Seitenkanten vernähten Lappen 5, 6 aufweist, durch die hindurch das Generator-Befestigungs-Gehäuse in das im übrigen geschlossene Gaskissen 1 eingeschoben bzw. in die Tasche eingebettet werden kann. Hierbei ist aufgrund der Überlappung der Enden der Öffnung und in Abhängigkeit von der Länge der Überlappung und damit der Länge der Randvernähung eine einwandfreie Kraftaufnahme und Begrenzung der Belastung an den Nähten im Funktionsfall sichergestellt. Es tritt darüberhinaus im Gegensatz zu den bekannten Einrichtungen im Belastungsfall keine Verringerung der Gasdichtigkeit ein, es wird vielmehr im Gegenteil infolge der durch den Aufblaszug erzeugten Anpressung des Gaskissens an das Generator-Befestigungs-Gehäuse eine weitere Erhöhung der Dichtigkeit erzielt.

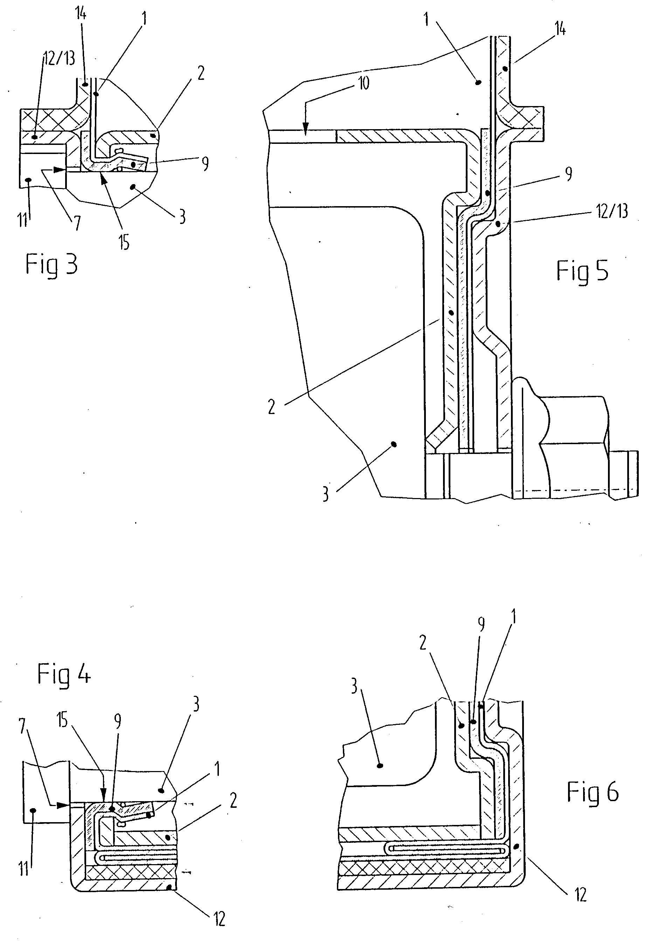

Die Tasche 4 und das Generator-Befestigungsgehäuse 2 sind im Falle der dargestellten Ausführungsform einseitig seitlich mit sich überdeckenden Öffnungen 7, 8 - Fig. 3, 7, 8 - versehen, über die das Innere des Generatorbefestigungsgehäuses zugänglich ist und über die der Generator 3 in das Generator-Befestigungs-Gehäuse 2 eingebracht werden kann. Es wird auf diese Weise die Montage weiterhin vereinfacht derart, daß das Gaskissen mit angenähter Tasche 1, 4 und das Generator-Befestigungsgehäuse 2 unabhängig voneinander hergestellt werden können bei Fertigstellung durch Montage und Einbringen des Generators entsprechend den jeweiligen Erfordernissen, wohingegen bisher die Anbringung des Gaskissens an dem Generator-Träger die vorherige vollständige Montage der gesamten Einheit erforderlich gemacht hat. Hierbei weisen die Öffnungen 7, 8 einen - mit geringem Spiel - größeren Durchmesser als der Generator 3, jedoch eine geringere Weite als sein Flansch 11 auf, sodaß nach der Montage des Generators 3 die Dichtigkeit zwischen Generatorflansch und Gaskissen sichergestellt ist. Aufgrund des Umstandes, daß die Öffnung des Gaskissen-Seitenteils einen gegenüber des Einschuböffnung des Generator-Befestigungsgehäuses 2 kleineren Durchmesser aufweist, wird beim Einschieben des Generators in seine Öffnung das Gewebe des Gaskissens aufgeweitet und schlauchartig um die Generatormantelfläche 15 gespannt und unterstützt die Dichtigkeit, die durch die Anpressung des Generatorflansches 11 an das Generator-Befestigungsgehäuse erzielt wird.

Die Tasche 4 ist an ihren seitlichen Flächen mit aufgenähten Verstärkungen 9 (Fig. 7) versehen, wodurch einerseits die Sicherheit der Kraftaufnahme weiterhin erhöht wird und darüberhinaus bei Verwendung eines entsprechenden Materials eine Isolierwirkung nach Außen erzielt werden kann.

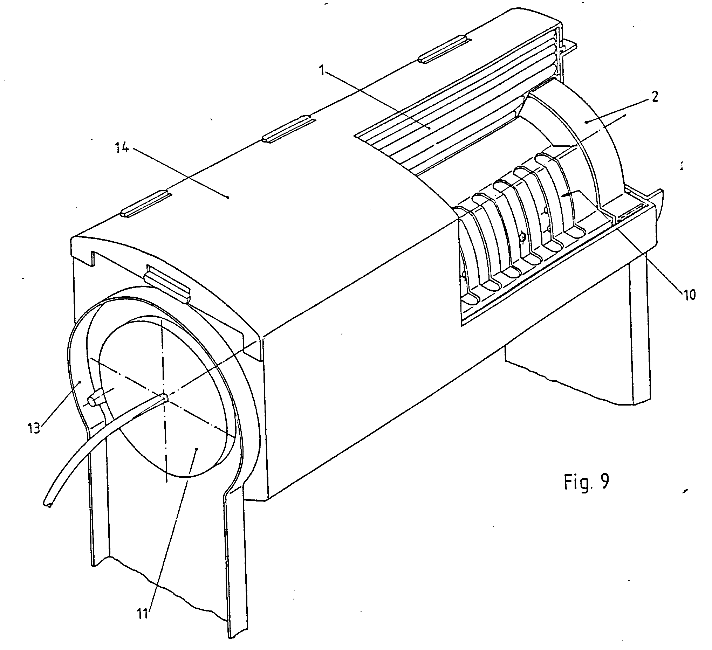

Im übrigen weist das Generator-Befestigungsgehäuse 2 die Form einer geschlossenen Hülse auf, die auf ihrer gegen das Gaskissen weisenden Fläche eine Vielzahl von Durchbrechungen 10 enthält, über die im Funktionsfall das im Generator erzeugte Gas in das Gaskissen gelangt. Durch die Wahl der Lage und Größe der Durchbrechungen ist in gewissem Umfang eine Steuerung des Gasstromes möglich. Fig. 9 zeigt die fertig montierte Gassack-Aufprall-Schutzeinrichtung in der Weise, daß das den Generator enthaltende Generator-Befestigungsgehäuse 2 zusammen mit dem in Wellen zusammengelegten Gaskissen 1 in gemeinsam ein Gehäuse bildende Wanne 12 mit Schutzhaube 14 eingelegt wird, in welcher Form die Einrichtung in das Kraftfahrzeug eingebaut werden kann.

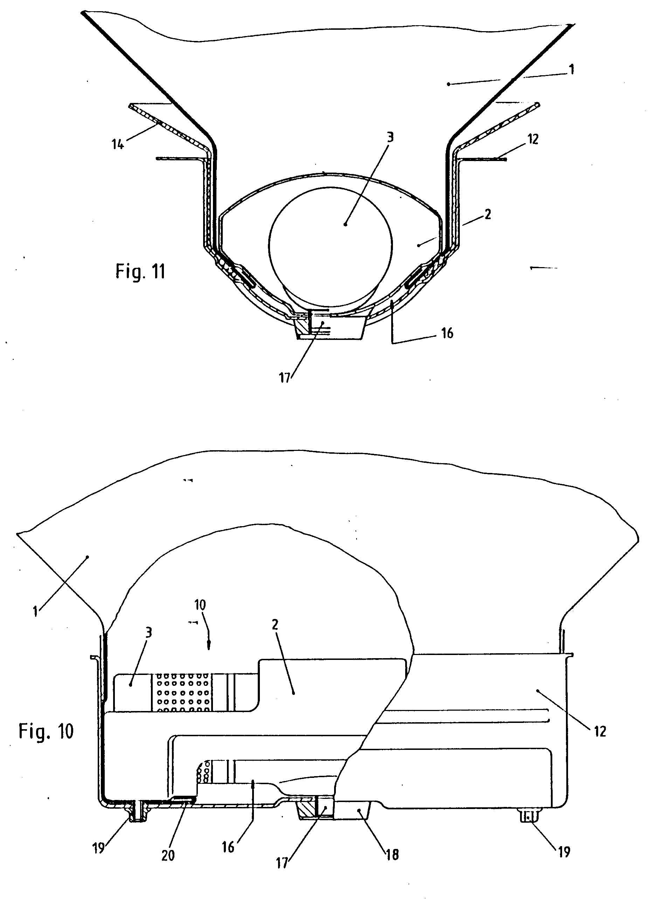

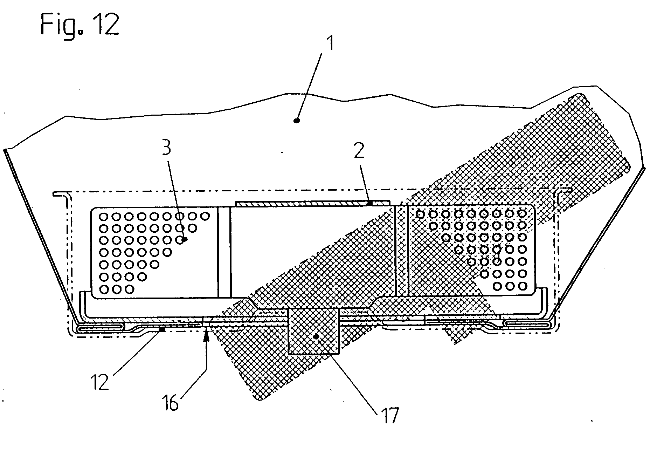

In den Fig. 10 und 11, in denen im übrigen dieselben Teile mit denselben Bezugsziffern versehen sind wie in den Fig 1 bis 9, ist eine andere Ausführungsform eines Gaskissens für Generatoren mit am Mantelumfang angeordnetem Zünder 17 wiedergegeben. In diesem Falle weist die bodenseitige Öffnung der Tasche die Form eines Fensters 16 auf, dessen Ränder 20 durch einbördeln und Randvernähung der Bördelung verstärkt sind und über das das Generatorbefestigungsgehäuse 2 und der Generator 3 in das Gaskissen 1 bezw. die Tasche eingebracht werden können. Die Montage erfolgt in der in Fig. 12 am Beispiel des Generators 3 schematisch wiedergegebenen Weise derart, daß der Generator in - schraffiert wiedergegebener - Längs- bezw. Schräglage durch das Fenster 16 hindurch in das Kissen eingeführt und in die Betriebsstellung gebracht wird, worauf die Teile - siehe insbesondere Fig. 10 - mittels der Befestigungsmuttern 19, 20 gegen die Wanne 12 verschraubt werden.

## Patentansprüche

1. Gassack-Aufprall-Schutzeinrichtung für Kraftfahrzeuge, bestehend aus einem Gaskissen, einem als Käfig ausgebildeten Generatorbefestigungsgehäuse zur Aufnahme eines Gasgenerators, das auf seiner gegen das Gaskissen weisenden Fläche mindestens eine Durchbrechung aufweist, sowie einem mit dem unteren Ende des Gaskissens verbundenen, das Generatorbefestigungsgehäuse umfassenden Träger, dadurch gekennzeichnet, daß der Träger von einer in einem Stück an das Gaskissen angearbeiteten, den Generator (3) allseitig umschließenden Tasche (4) gebildet ist, die an ihrem unteren Ende eine Öffnung in Form von sich labyrinthartig überdeckender, an den Seitenkanten vernähter Lappen (5, 6) aufweist.

2. Gassack-Aufprall-Schutzeinrichtung für Kraftfahrzeuge nach Anspruch 1, dadurch gekennzeichnet, daß das Generatorbefestigungsgehäuse (2) als geschlossener Käfig ausgebildet ist, der auf seiner gegen das Gaskissen weisenden Fläche mindestens eine Durchbrechung (10) aufweist, wobei die Tasche (4) und das Generator-Befestigungsgehäuse seitlich einseitig mit jeweils einer sich überdeckenden Öffnung (7, 8) versehen sind, über die der Generator (3) in das Generator-Befestigungsgehäuse (2) eingebracht werden kann.

3. Gassack-Aufprall-Schutzeinrichtung für Kraftfahrzeuge nach Anspruch 2, dadurch gekennzeichnet, daß die Öffnung (8) im Seitenteil der Tasche einen kleineren Durchmesser als die Öffnung (7) des Generatorbefestigungsgehäuses (2) aufweist.

4. Gassack-Aufprall-Schutzeinrichtung für Kraftfahrzeuge nach Anspruch 2, dadurch gekennzeichnet, daß das Generator-Befestigungsgehäuse (2) die Form einer geschlossenen Hülse aufweist mit einer Vielzahl von Bohrungen auf ihrer gegen das Gaskissen weisenden Fläche.

5. Gassack-Aufprall-Schutzeinrichtung für Kraftfahrzeuge nach einem der Ansprüche 1 bis 4, dadurch gekennzeichnet, daß die Öffnung (7) einen größeren Durchmesser als die Generator-Patrone, jedoch eine geringere Weite als der Generatorflansch (11) aufweist.

6. Gassack-Aufprall-Schutzeinrichtung für Kraftfahrzeuge nach einem der Ansprüche 1 bis 5, dadurch gekennzeichnet, daß das Generator-Befestigungsgehäuse (2) auf seiner gegen das Gaskissen weisenden Fläche mindestens eine Öffnung (10) aufweist.

7. Gassack-Aufprall-Schutzeinrichtung für Kraftfahrzeuge nach Anspruch 1, dadurch gekennzeichnet, daß die bodenseitige Öffnung der Tasche (4) die Form eines Fensters (16) aufweist.

8. Gassack-Aufprall-Schutzeinrichtung für Kraftfahrzeuge nach Anspruch 7, dadurch gekennzeichnet, daß die Ränder (20) des Fensters (16) durch Einbördeln und Randvernähung der Bördelung verstärkt sind.

## Claims

1. Shock-absorbing airbag safety system for automotive vehicles, comprising a gas cushion, a generator mounting housing, configured as a cage, for the accommodation of a gas generator which has at least one opening on its face remote from the gas cushion, and a support, which is connected to the lower end of the gas cushion and surrounds the generator mounting housing, characterised in that the support is formed from a pocket assembly (4), which is attached in one piece to the gas cushion and surrounds the generator (3) on all sides, said pocket assembly having at its lower end an opening in the form of flaps (5, 6), which cover one another in a labyrinth-like manner and are stitched at the lateral edges.

2. Shock-absorbing airbag safety system for automotive vehicles according to claim 1, characterised in that the generator mounting housing (2) is configured as a closed cage which has at least one opening (10) on its face remote from the gas cushion, the pocket assembly (4) and the generator mounting housing each being provided laterally at one end with a respective covering opening (7, 8), via which the generator (3) can be introduced into the generator mounting housing (2).

3. Shock-absorbing airbag safety system for automotive vehicles according to claim 2, characterised in that the opening (8) in the lateral portion of the pocket assembly has a smaller diameter than the opening (7) of the generator mounting housing (2).

4. Shock-absorbing airbag safety system for automotive vehicles according to claim 2, characterised in that the generator mounting housing (2) has the form of a closed sleeve with a plurality of bores on its face remote from the gas cushion.

5. Shock-absorbing airbag safety system for automotive vehicles according to one of claims 1 to 4, characterised in that the opening (7) has a greater diameter than the generator cartridge, but has a smaller width than the generator flange (11).

6. Shock-absorbing airbag safety system for automotive vehicles according to one of claims 1 to 5, characterised in that the generator mounting housing (2) has at least one opening (10) on its face remote from the gas cushion.

7. Shock-absorbing airbag safety system for automotive vehicles according to claim 1, characterised in that the opening on the base of the pocket assembly (4) has the form of a window (16).

8. Shock-absorbing airbag safety system for automotive vehicles according to claim 7, characterised in that the edges (20) of the window (16) are reinforced by the provision of a border and by stitching the edge of the border.

## Revendications

1. Dispositif de protection contre les chocs à sac gonflable pour véhicules automobiles, constitué d'un coussin gonflable, d'un boîtier de fixation pour générateur, qui est réalisé sous forme d'une cage pour recevoir un générateur de gaz, et qui présente au moins une découpe sur sa surface tournée vers le coussin gonflable, ainsi que d'un support relié à l'extrémité inférieure du coussin gonflable et entourant le boîtier de fixation du générateur, caractérisé en ce que le support est formé par une poche (4) aménagée en une seule pièce sur le coussin gonflable et enveloppant de tous côtés le générateur (3), poche qui présente, à son extrémité inférieure, une ouverture sous forme de languettes (5, 6) qui se chevauchent à la manière d'un labyrinthe et qui sont cousus le long des bords latéraux.

2. Dispositif de protection contre les chocs à sac gonflable pour véhicules automobiles selon la revendication 1, caractérisé en ce que le boîtier (2) de fixation du générateur est réalisé sous forme d'une cage fermée, qui présente au moins une découpe (10) sur sa surface tournée vers le coussin gonflable, la poche (4) et le boîtier de fixation de générateur étant alors pourvus latéralement, sur un seul côté, d'ouvertures respectives (7, 8) qui se superposant et au travers desquelles le générateur (3) peut être introduit dans le boîtier (2) de fixation du générateur.

3. Dispositif de protection contre les chocs à sac gonflable pour véhicules automobiles selon la revendication 2, caractérisé en ce que l'ouverture (8) ménagée dans la partie latérale de la poche présente un plus petit diamètre que l'ouverture (7) du boîtier (2) de fixation du générateur.

4. Dispositif de protection contre les chocs à sac gonflable pour véhicules automobiles selon la revendication 2, caractérisé en ce que le boîtier (2) de fixation du générateur présente la forme d'un manchon fermé, comportant une multiplicité de trous sur sa surface tournée vers le coussin gonflable.

5. Dispositif de protection contre les chocs à sac gonflable pour véhicules automobiles selon l'une des revendications 1 à 4, caractérisé en ce que l'ouverture (7) présente un plus grand diamètre que la cartouche du générateur, mais une largeur inférieure à celle du flasque (11) du générateur.

6. Dispositif de protection contre les chocs à sac gonflable pour véhicules automobiles selon l'une des revendications 1 à 5, caractérisé en ce que le boîtier (2) de fixation du générateur présente au moins une ouverture (10) sur sa surface tournée vers le coussin gonflable.

7. Dispositif de protection contre les chocs à sac gonflable pour véhicules automobiles selon la revendication 1, caractérisé en ce que l'ouverture, côté fond, de la poche (4) présente la forme d'une fenêtre (16).

8. Dispositif de protection contre les chocs à sac gonflable pour véhicules automobiles selon la revendication 7, caractérisé en ce que les bords (20) de la fenêtre (16) sont renforcés par repliage et couture des bords repliés.
